# EUROPEAN PATENT SPECIFICATION

(11) **EP 1 423 635 B1**
(45) Date of publication and mention of the grant of the patent: **28.12.2005**
(21) Application number: 02765742.8
(22) Date of filing: 05.09.2002
(51) Int. Cl.: F16L 21/035

(54) **COMPRESSIBLE SEALING RING FOR PIPES, PROVIDED WITH AN ENCIRCLING BEAD**
KOMPRIMIERBARER DICHTUNGSRING FÜR MIT UMGEBENDER WULST VERSEHENE ROHRE
BAGUE D'ETANCHEITE COMPRESSIBLES POUR CONDUITES, MUNIE D'UN CORDON PERIPHERIQUE

(30) Priority: 06.09.2001 SE 0102944
(43) Date of publication of application: 02.06.2004
(73) Proprietor: Trelleborg Forsheda Building AB, 331 29 Värnamo (SE)
(72) Inventor: CAVKA, Elvir, S-331 41 Värnamo (SE); NILSSON, Ulf, S-331 50 Värnamo (SE); BURMAN, Tomas, SE-331 31 Värnamo (SE)
(74) Representative: Andersson, Per-Olof
(86) International application number: PCT/SE2002/001578
(87) International publication number: WO 2003/021144

(56) References cited:
- FR-A- 1 423 100
- FR-A1- 2 403 497
- US-A- 5 944 323

## Description

### Field of the Invention

The present invention relates to a compressible sealing ring for sealing an annular gap between a circular cylindrical outer surface of a spigot end of a first pipe and a circular cylindrical inner surface of a socket at one end of a second pipe, which is axially slidable onto the first pipe so as to form said gap during compression of the sealing ring mounted on the spigot end, the sealing ring having, in non-compressed state, a circular cylindrical inner sealing surface, which is adapted to abut against said outer surface, and a frustoconical outer sealing surface, the diameter of which increases in the axial direction of sliding-on of the second pipe and which is adapted to abut, in the compressed state of the sealing ring, against said inner surface the sealing ring further having, in one of its lateral edge portions, a circumferential recess being essentially wedge-shaped in cross-section in the non-compressed state of the sealing ring and being nearly closed in the compressed state of the sealing rings.

### Background Art

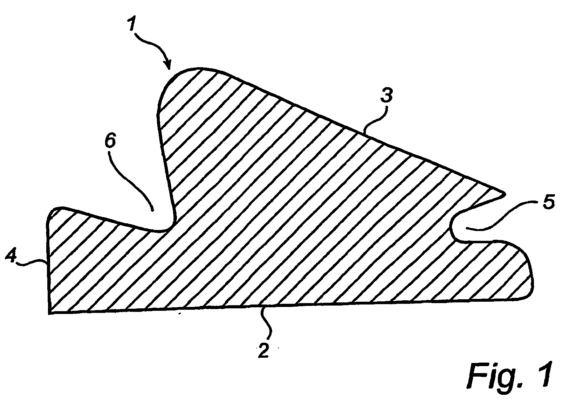

A prior-art sealing ring of this kind will be described below with reference to Figs 1-5.

The prior-art sealing ring 1, which is represented in relaxed state in Fig. 1, is made of rubber and has a circular cylindrical inner sealing surface 2, a frustoconical outer sealing surface 3 and a circumferential, radial' end surface 4. The sealing ring 1 shown has in each of its lateral edge portions an essentially wedge-shaped recess 5, 6.

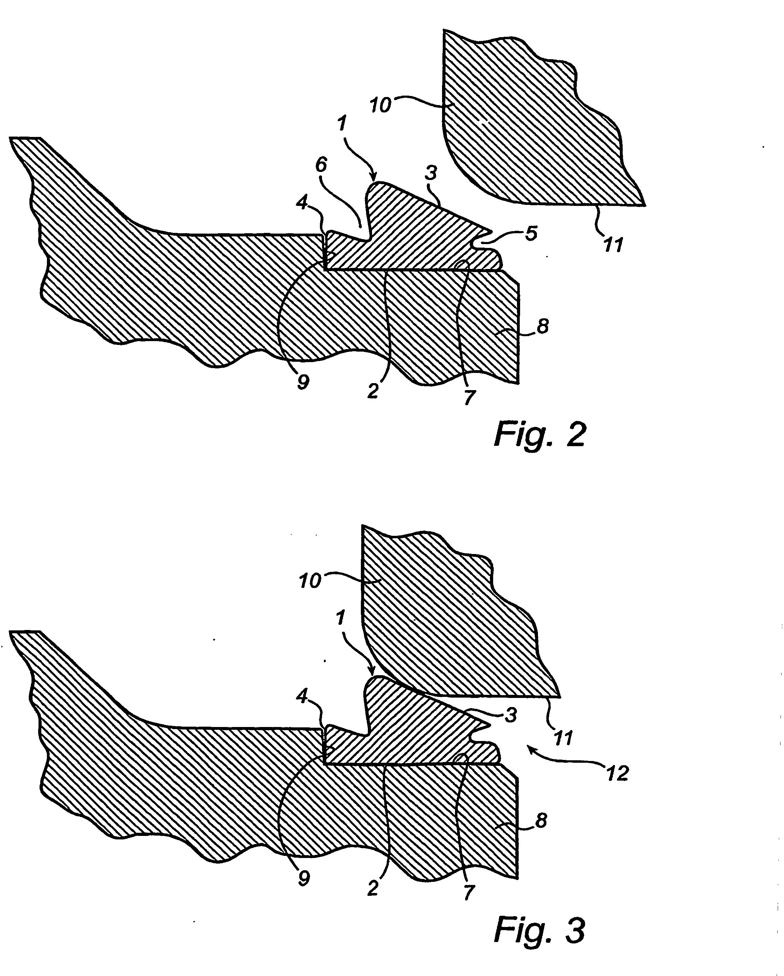

In Fig. 2, the sealing ring 1 is mounted on a circular cylindrical outer surface 7 of a spigot end 8 of a first pipe. The inner sealing surface 2 of the sealing ring 1 abuts against the outer surface 7 of the spigot end 8 and its end surface 4 abuts against a circumferential shoulder 9 formed on the spigot end. It will be seen that the sealing ring 1 is arranged in such manner that the diameter of the frustoconical outer sealing surface 3 thereof decreases in the direction of the free end of the spigot end 8.

Fig. 2 also shows part of a socket 10, which is formed at one end of a second pipe and which has a circular cylindrical inner surface 11, the diameter of which is larger than the diameter of the outer surface 7 formed on the spigot end 8 but smaller than the maximum outer diameter of the sealing ring 1.

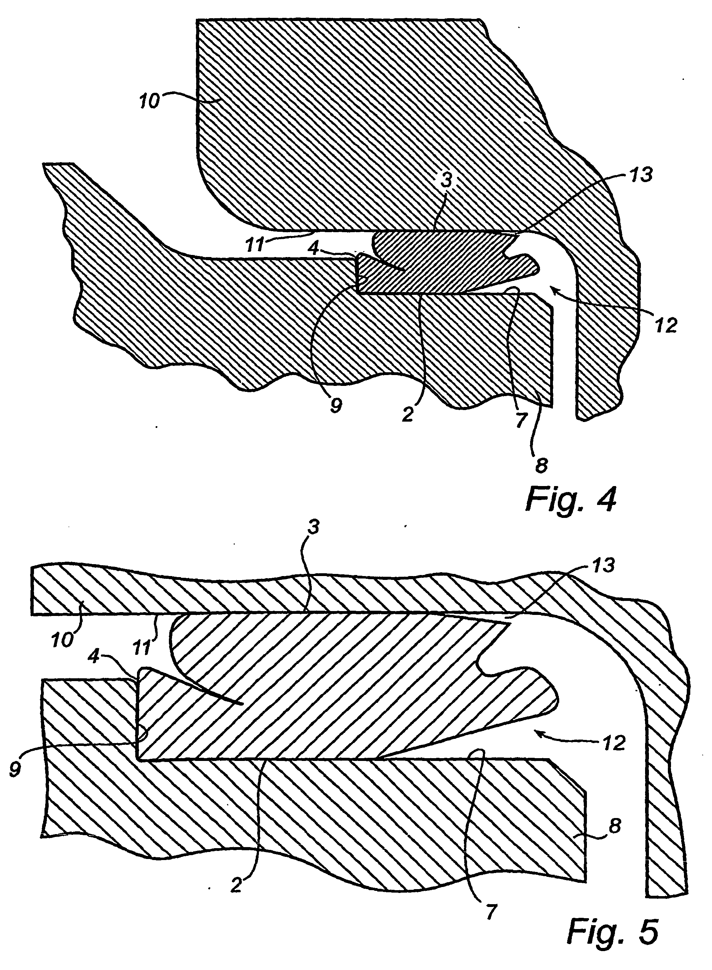

To form a pipe joint between the two pipes the socket 10 of the second pipe is slid axially onto the spigot end 8 of the first pipe, which causes a gap 12 to form between the two circular cylindrical surfaces 7 and 11. During this axial sliding operation, the socket 10 makes contact with the frustoconical outer sealing surface 3 of the sealing ring 1 (see Fig. 3), which surface acts as a guide surface for the socket 10 guiding said socket to a concentric position relative to the spigot end 8. As the sliding-on of the socket 10 onto the spigot end 8 progresses the radially outer portion of the sealing ring 1 is bent in a counterclockwise direction (with reference to Figs 1-5) to a position in which the recess 6 is nearly closed, following which the sealing ring 1 is compressed so as to assume the compressed state shown in Figs 4 and 5 when the socket 10 has been slid onto the spigot end 8.

It is essential that both sealing surfaces 2 and 3 of the sealing ring 1 be pressed against the surfaces 7 and 11 defining the gap 12 with sufficient pressure to seal the gap 12 properly while the application force, i e the force required to slide the socket 10 onto the spigot end 8 with the sealing ring 1 mounted thereon, needs to be moderate. However, it is also essential, particularly when the sealing ring 1 is used, as in the example shown, in connection with concrete pipes having coarse, irregular surfaces 7 and 11, that the sealing surfaces 2 and 3 of the sealing ring 1 abut against the surfaces 7 and 11 defining the gap 12 over an extensive axial width.

As shown in Fig. 4, and in particular in Fig. 5, the outer sealing surface 3 does not abut against the inner surface 11 of the socket 10 over its whole axial extension, but there is a relatively large wedge-shaped opening 13 between the surfaces 3 and 11. In some cases, this opening 13 may widen further as a result of, for example, waste water conducted in the pipes breaking open the gap and thus reducing the sealing effect of the sealing ring 1, possibly causing leakage.

### Summary of the Invention

The object of the present invention is therefore to provide a sealing ring with the largest possible axial contact width, i e the opening described above is eliminated or at least considerably reduced, while taking into consideration fact that the compression of the sealing ring during use must not be so great that the application force mentioned above becomes excessive, which would imply a risk of the socket breaking.

This object is achieved according to the present invention by a sealing ring of the kind which is described by way of introduction and which is characterised in that at least one circumferential bead protruding in the non-compressed state of the sealing ring is formed on the inner sealing surface, the bead being provided in an area of the inner sealing surface that is located essentially radially opposite the half of the frustoconical outer sealing surface that has the largest diameter. FR 1 423 100 describes a sealing ring having a bead allowing the sealing ring to be rolled onto a pipe spigot end.

The radial extension of the bead in the non-compressed state of the sealing ring is preferably about 5-15 % of the difference between the maximum radius of the outer sealing surface and the radius of the inner sealing surface.

### Brief Description of the Drawings

The invention will now be described in more detail with reference to the accompanying drawings.
Fig. 1 is a sectional view of the sealing ring described above in relaxed state.
Fig. 2 is a sectional view of the sealing ring according to Fig. 1 as mounted on a spigot end.
Fig. 3 is a sectional view of the sealing ring according to Fig. 1 as mounted on the spigot end when a socket is being slid onto the spigot end.
Fig. 4 is a sectional view of the sealing ring according to Fig. 1 in compressed state when sealing a gap between the spigot end and the socket.
Fig. 5 is a sectional view of a portion of Fig. 4 on an enlarged scale.
Fig. 6 is a sectional view of an embodiment of a sealing ring according to the invention in relaxed state.
Fig. 7 is a sectional view of the sealing ring according to Fig. 6 as mounted on a spigot end.
Figs 8 and 9 are sectional views of the sealing ring according to Fig. 6 as mounted on the spigot end when a socket is being slid onto the spigot end during different phases of the sliding-on operation.
Fig. 10 is a sectional view of the sealing ring according to Fig. 6 in compressed state when sealing a gap between the spigot end and the socket.
Fig. 11 is a sectional view of a part of Fig. 10 on an enlarged scale.

### Description of a Preferred Embodiment

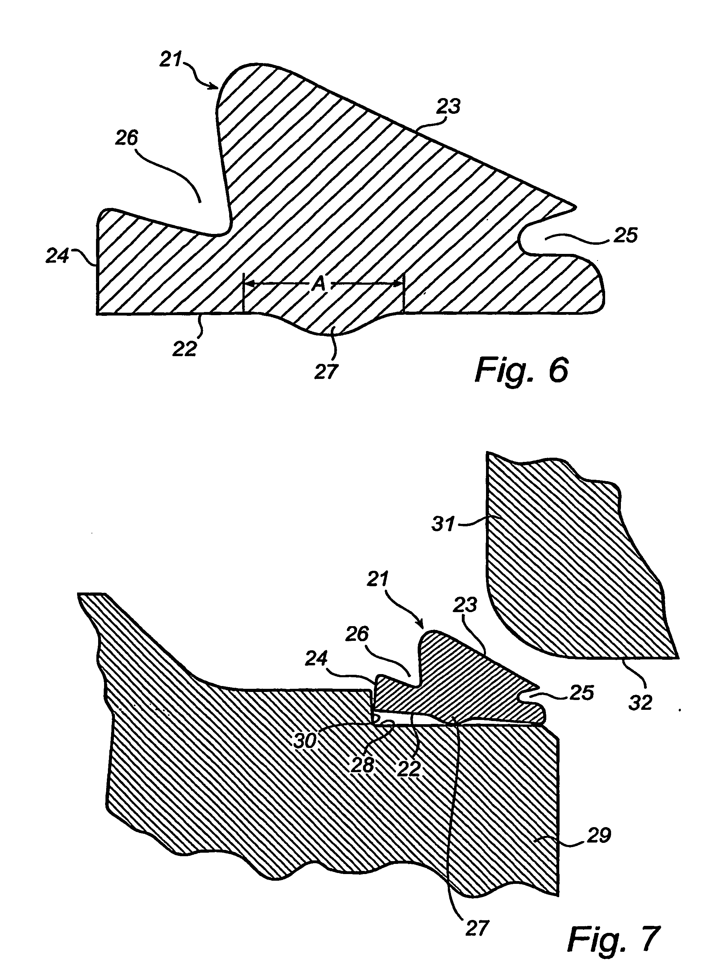

The sealing ring 21 shown in Fig. 6 is very similar to the prior-art sealing ring 1 described above. It is made of rubber and has, as shown in Fig. 6, i e in relaxed state, a circular cylindrical inner surface 22, a frustoconical outer sealing surface 23 and a circumferential, radial end surface 24. The sealing ring 21 has in each of its lateral edge portions a circumferential recess 25, 26, which is essentially wedge-shaped in cross-section.

The sealing ring 21 has an inwardly protruding, circumferential bead 27, which is formed on the inner sealing surface 22. The bead 27 is rounded in cross-section and provided in an area of the inner sealing surface 22 that is located essentially radially opposite the half of the frustoconical outer surface 23 that has the largest diameter, i e in the area designated A in Fig. 6.

Suitably, the bead 27 has a radial extension of about 5-15 % of the height of the sealing ring 21 without the bead 27, i e of the difference between the maximum radius of the outer sealing surface 23 and the radius of the inner sealing surface 22.

In Fig. 7, the sealing ring 21 is mounted on a circular cylindrical outer surface 28 of a spigot end 29 of a first pipe, which in the example shown is a concrete pipe. Here, the sealing ring 21 rests against the outer surface 28 both through the bead 27 and through the front portion of the inner sealing surface 22, i e the portion located closest to the free end of the spigot end 29. The end surface 24 of the sealing ring 21 abuts against a circumferential shoulder 30 formed on the spigot end 29. As shown, the sealing ring 21 is arranged in such manner that the diameter of the frustoconical outer sealing surface 23 decreases in the direction of the free end of the spigot end 29.

Fig. 7 also shows part of a socket 31, which is formed at one end of a second pipe, in the example shown a concrete pipe, and which has a circular cylindrical inner surface 32, the diameter of which is larger than the diameter of the outer surface 28 formed on the spigot end 29 but smaller than the maximum outer diameter of the sealing ring 21.

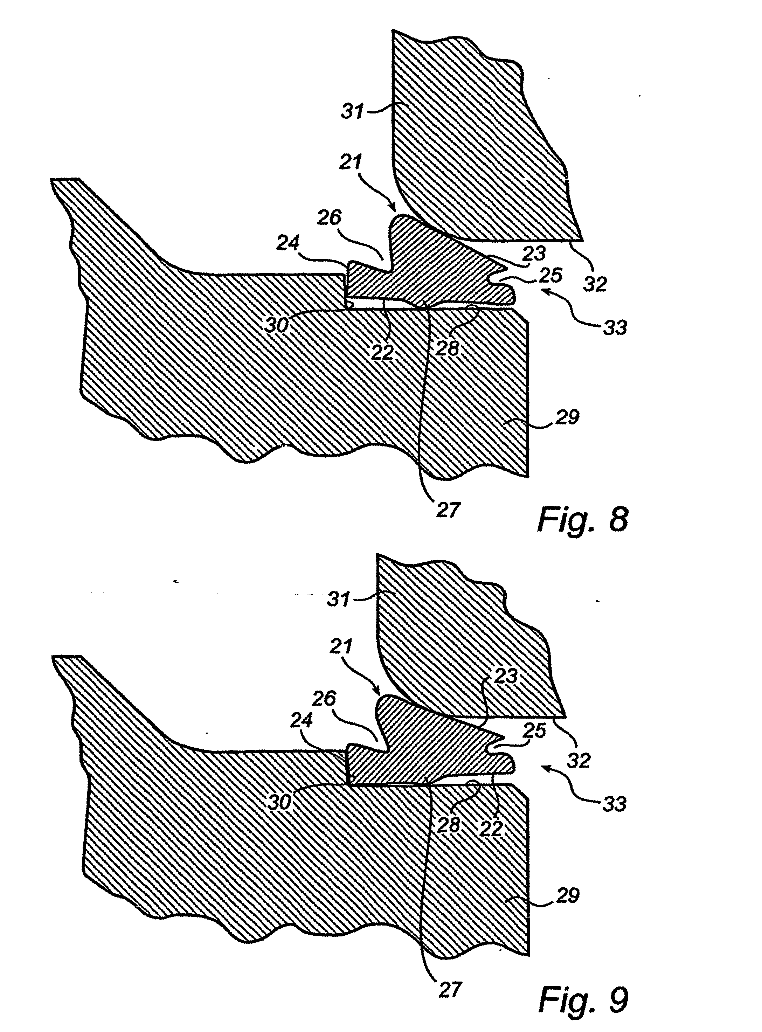

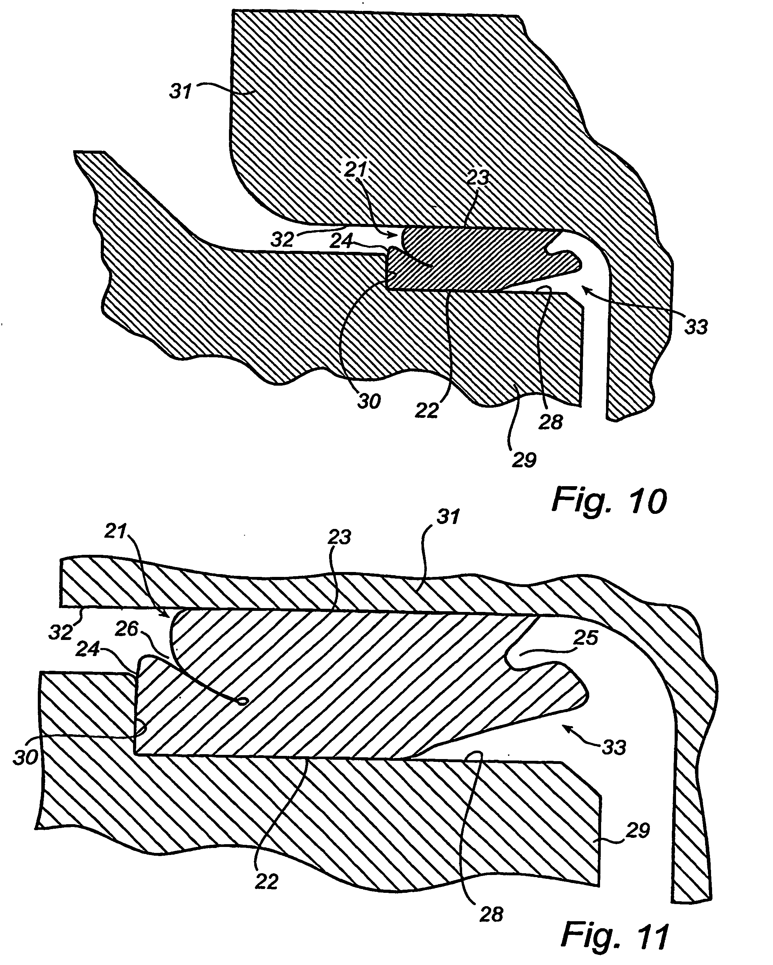

To form a pipe joint between the two pipes the socket 31 of the second pipe is slid axially onto the spigot end 29 of the first pipe, which causes a gap 33 to form between the two circular cylindrical surfaces 28 and 32. During this axial sliding-on operation, the socket 31 makes contact with the frustoconical outer sealing surface 23 of the sealing ring 21 (see Fig. 8), which surface acts as a guide surface for the socket 31 guiding said socket to a concentric position relative to the spigot end 29. As the sliding-on of the socket 31 onto the spigot end 29 progresses, the sealing ring 21 first tilts about the bead 27, so that the front portion of the inner sealing surface 22 rises from the outer surface 28 of the spigot end 29 and its rear portion, i e its portion located closest to the radial end surface 24, is instead brought to abut against the outer surface 28 (see Fig. 9), following which the radially outer portion of the sealing ring 21 is bent in a counterclockwise direction (with reference to Figs 6-11) to a position in which the recess 26 is nearly closed. The sealing ring 21 is then compressed to assume the compressed state shown in Figs 10 and 11 when the socket 31 has been slid onto the spigot end 29.

As shown in Figs 10 and 11, the outer sealing surface 23 of the sealing ring 21 abuts against the inner surface 32 of the socket 31 over essentially its whole axial extension, i e the opening 13 that was characteristic of the prior-art sealing ring 1 has been practically eliminated. At the same time, the sealing ring 21 according to the invention ensures a maximum contact pressure against the inner surface 32 of the socket 31 over a greater width than the prior-art sealing ring 1.

In Figs 7-11, the inventive sealing ring 21 described above is shown as used in a pipe joint between two horizontally arranged concrete pipes. It will be appreciated that the sealing ring may also be used in a pipe joint between two pipes which are oriented in a direction other than horizontal, for example two vertical pipes. The sealing ring 21 according to the invention may also be used in a pipe joint between two pipes of a different material than concrete.

## Claims

1. A compressible sealing ring for sealing an annular gap (33) between a circular cylindrical outer surface (28) of a spigot end (29) of a first pipe and a circular cylindrical inner surface (32) of a socket (31) at one end of a second pipe, which is axially slidable onto the first pipe so as to form said gap (33) during compression of the sealing ring (21) mounted on the spigot end (29), the sealing ring (21) having, in non-compressed state, a circular cylindrical inner sealing surface (22), which is adapted to abut against said outer surface (28), and a frustoconical outer sealing surface (23), the diameter of which increases in the axial direction of sliding-on of the second pipe and which is adapted to abut, in the compressed state of the sealing ring (21), against said inner surface (32), the sealing ring further having, in one of its lateral edge portions, a circumferential recess (26) being essentially wedge-shaped in cross-section in the non-compressed state of the sealing ring and being nearly closed in the compressed state of the sealing ring, **characterised in that** at least one circumferential bead (27) protruding in the non-compressed state of the sealing ring (21) is formed on the inner sealing surface (22), the bead (27) being provided in an area (A) of the inner sealing surface (22) that is located essentially radially opposite the half of the frustoconical outer sealing surface (23) that has the largest diameter.

2. A sealing ring according to claim 1, wherein the radial extension of the bead (27) in the non-compressed state of the sealing ring is about 5-15 % of the difference between the maximum radius of the outer sealing surface (23) and the radius of the inner sealing surface (22).

## Patentansprüche

1. Komprimierbarer Dichtungsring zum Abdichten eines ringförmigen Spalts (33) zwischen einer kreisförmigen zylindrischen Außenfläche (28) eines Einsteckendes (29) eines ersten Rohres und einer kreisförmigen zylindrischen Innenfläche (32) einer Muffe (31) an einem Ende eines zweiten Rohres, das axial auf das erste Rohr geschoben werden kann, um so den Spalt (33) während des Zusammendrückens des Dichtungsrings (21) zu bilden, der an dem Einsteckende (29) angebracht ist, wobei der Dichtungsring (21) im nicht komprimierten Zustand eine kreisförmige zylindrische innere Dichtungsfläche (22), die so eingerichtet ist, dass sie an der Außenfläche (28) anliegt, und eine kegelstumpfförmige äußere Dichtungsfläche (23) aufweist, deren Durchmesser in der axialen Richtung des Aufschiebens des zweiten Rohres zunimmt und die so eingerichtet ist, dass sie im komprimierten Zustand des Dichtungsrings (21) an der Innenfläche (32) anliegt, wobei der Dichtungsring des weiteren in einem seiner seitlichen Kantenabschnitte eine umfangsseitige Aussparung (26, 25) aufweist, die im nicht komprimierten Zustand des Dichtungsrings im Wesentlichen keilförmig im Querschnitt ist und im komprimierten Zustand des Dichtungsrings fast geschlossen ist, **dadurch gekennzeichnet, dass** wenigstens eine umfangsseitige Wulst (27), die in dem nicht komprimierten Zustand des Dichtungsrings (21) vorsteht, an der inneren Dichtungsfläche (22) ausgebildet ist, wobei die Wulst (27) in einem Bereich (A) der inneren Dichtungsfläche (22) vorgesehen ist, die im Wesentlichen radial entgegengesetzt zu der Hälfte der kegelstumpfförmigen äußeren Dichtungsfläche (23) angeordnet ist, die den größten Durchmesser aufweist.

2. Dichtungsring nach Anspruch 1, wobei die radiale Ausdehnung der Wulst (27) in dem nicht komprimierten Zustand des Dichtungsrings etwa 5-15 % des Unterschiedes zwischen dem maximalen Radius der äußeren Dichtungsfläche (23) und dem Radius der inneren Dichtungsfläche (22) beträgt.

## Revendications

1. Bague d'étanchéité compressible pour rendre étanche un espace annulaire (33) entre une surface externe cylindrique circulaire (28) d'un bout mâle (29) d'un premier tuyau et une surface interna cylindrique circulaire (32) d'une emboîture (31) au niveau d'une extrémité d'un second tuyau, qui peut coulisser de manière axiale sur le premier tuyau afin de former ledit espace (33) pendant la compression de la bague d'étanchéité (21) montée sur le bout mâle (29), la bague d'étanchéité (21) ayant, dans un état non comprimé, une surface d'étanchéité interne cylindrique circulaire (22), qui est adaptée pour venir en butée contre ladite surface externe (28), et une surface d'étanchéité externe tronconique (23), dont le diamètre augmente dans la direction axiale du coulissement du second tuyau et qui est adaptée pour venir en butée, dans l'état comprimé de la bague d'étanchéité (21), contre ladite surface (32), la bague d'étanchéité comprenant en outre, dans l'une de ses parties de bord latérales, un enfoncement circonférentiel (26, 25) qui a essentiellement une section transversale en forme de coin dans l'état non comprimé de la bague d'étanchéité et qui est presque fermé dans l'état comprimé de la bague d'étanchéité, **caractérisé en ce qu'**au moins un cordon circonférentiel (27) faisant saillie dans l'état non comprimé de la bague d'étanchéité (21) est formé sur la surface d'étanchéité interne (22), le cordon (27) étant prévu dans une région (A) de la surface d'étanchéité interne (22) qui est située essentiellement radialement à l'opposé de la moitié de la surface d'étanchéité externe tronconique (23) qui a le plus grand diamètre.

2. Bague d'étanchéité selon la revendication 1, dans laquelle l'extension radiale du cordon (27) dans l'état non comprimé de la bague d'étanchéité représente environ de 5 à 15% de la différence entre le rayon maximum de la surface d'étanchéité externe (23) et le rayon de la surface d'étanchéité interne (22).
